# EUROPÄISCHE PATENTSCHRIFT

(11) **EP 3 087 817 B1**
(45) Veröffentlichungstag und Bekanntmachung des Hinweises auf die Patenterteilung: **17.10.2018**
(21) Anmeldenummer: 16401028.2
(22) Anmeldetag: 19.04.2016
(51) Int. Cl.: A01C 17/00, A01C 21/00

(54) **VERFAHREN ZUR ÜBERPRÜFUNG DER EIGNUNG VON AUSZUSTREUENDEN GRANULIERTEN MINERALDÜNGER**
METHOD FOR CHECKING THE SUITABILITY OF GRANULAR MINERAL FERTILISER TO BE SPREAD
PROCEDE DE VERIFICATION DU CARACTERE APPROPRIE D'ENGRAIS MINERAL EN GRANULES A EPANDRE

(30) Priorität: 28.04.2015 DE 102015106486
(43) Veröffentlichungstag der Anmeldung: 02.11.2016
(73) Patentinhaber: Amazonen-Werke H. Dreyer GmbH & Co. KG, 49205 Hasbergen (DE)
(72) Erfinder: Scheufler, Bernd, 49205 Hasbergen (DE); Rahe, Florian, 49504 Lotte (DE)

(56) Entgegenhaltungen:
- WO-A1-02/15120
- WO-A1-95/24823
- DE-C2- 19 749 221

## Beschreibung

Die Erfindung betrifft ein Verfahren zur Überprüfung der Eignung von auszustreuendem granuliertem Mineraldünger gemäß des Oberbegriffes des Patentanspruches 1.

Ein derartiges Verfahren zur Überprüfung der Eignung von auszustreuenden granulierten Mineraldüngern ist in der nicht vorveröffentlichten DE 10 2014 108 561 beschrieben. Hier soll in einfacher Weise der Grad der Entmischung bzw. der Veränderungsgrad der ursprünglich homogenen Mischung des Mischdüngers nach dem Ausstreuen festgestellt werden.

Hier wird eine Bildauswertung nach dem Verteilen des Düngermateriales durch einen Zentrifugaldüngerstreuer des ausgestreuten Düngers auf der zu verteilenden Fläche durchgeführt, um festzustellen, wie sich das Mischungsverhältnis ändert und/oder geändert hat. Vereinfacht ausgedrückt: Es wird also eine Bildauswertung in Verbindung mit Mischdüngern durchgeführt. Mittels einer Bildaufnahme durch eine geeignete Sensorik oder Kamera in Verbindung mit einem entsprechenden Auswerteprogramm wird hier das in der DE 10 2014 039 964.5 beschriebene Verfahren in modifizierter Form auch bei Mischdüngern einsetzen.

An bei diesen Überprüfungen wird in Messschalen gesammelte oder der sich auf Haftflächen festsetzte bereits ausgestreute und verteilte Dünger wird zur Bildauswertung genutzt. Hierdurch lässt sich mit einer entsprechenden Auswerteroutine, die in einem geeigneten Speicher eines Rechners, der auch mobil ausgestaltet sein kann, hinterlegt ist, die entsprechende Auswertung zur Ermittlung des Mischungsverhältnisses bzw. der Entmischung des ausgestreuten Mischdüngers, wie er auf der zu bestreuenden Fläche tatsächlich verteilt ist, vornehmen.

Bei den bekannten Verfahren wird also erst nach dem Ausstreuen der granulierten Mineraldünger auf der zu bestreuenden Fläche die Eignung dieser auszustreuenden granulierten Mineraldünger überprüft.

Diese Verfahrensweise ist unökonomisch und führt erst über Umwegen zu dem Ziel festzustellen, ob der vorliegende auszustreuende granulierte Mineraldünger überhaupt geeignet ist, in ausreichend gleichmäßiger Weise für die geforderte Arbeitsbreite ausgebracht werden zu können.

Hierbei ist folgendes Problemfeld zu berücksichtigen:
Die verschiedenen Sorten von Mineraldüngern unterscheiden sich nicht nur in der Zusammensetzung der Nährstoffe, sondern auch in den physikalischen Stoffeigenschaften, die sich auf Gleichmäßigkeit der Querverteilung auswirken, wenn diese mit Zentrifugaldüngerstreuern ausgebracht werden. Solche physikalischen Stoffeigenschaften sind vorrangig:
- das Reib - Rollverhalten beim Beschleunigen auf der Wurfscheibe
- das aerodynamische Verhalten beim Flug in der Luft.

Je nach Düngersorte gibt es deutliche Unterschiede bzgl. dieser Eigenschaften.

Bei einheitlichen Granulaten lassen sich diese Verhaltenseigenschaften sehr einfach berücksichtigen.

Durch die Wahl von bestimmten Einstellwerten am Zentrifugaldüngerstreuer kann eine gewählte Arbeitsbreite für einheitliche granulierte Dünger relativ einfach exakt eingestellt werden. Die Einstellwerte sind in sogenannten Streutabellen zusammengestellt oder lassen sich durch eine individuelle Beratung (Dünger - Service) erfragen. Hierzu gibt es verschiedene etablierte Verfahren, die beispielsweise in der EP 0 567495 B2 oder DE 41 05 046 A1 beschrieben sind.

Auch in der DE 197 49 221 C2 ist ein Verfahren zum Bestimmen der physikalischen, insbesondere der kornspezifischen Eigenschaften handelsüblicher Düngersorten mittels mehrerer auf Trägern angeordneter fotografischer Abbildungen des Haufwerks der Düngersorten beschrieben. Hier erfolgt rein optisch durch das menschliche Auge ein entsprechender Vergleich der fotografischen Abbildung mit dem vorliegenden zu streuenden granulierten Dünger.

Diese vergleichende Beurteilung durch das menschliche Auge ist bereits bei reinen Düngersorten schwierig. Noch schwieriger ist die Situation bei den sogenannten Mischdüngern. Hier sind verschiedenartige Einzelkomponenten vom granulierten Düngern mit stark unterschiedlichen Stoffeigenschaften in Mischstationen miteinander vermengt worden. Das Mischungsverhältnis bestimmt der Landwirt beim Kauf der Ware. Es ergeben sich daraus zumindest zwei Probleme:
- es existieren keine Einstellwerte
- es kommt zu einer Entmischung während der Ausbringung.

Dadurch dass der Landwirt immer wieder andere Mischungsverhältnisse nach der jeweiligen aktuellen Nährstoffversorgung verlangt, gibt es immer neue Herausforderungen und Bedürfnisse für die dann darauf abgestimmten Einstelldaten und/oder -werte für die entsprechende Einstellung des Zentrifugalstreuers.

Auch können sich die Streueigenschaften des Düngers während der Lagerung und des Transportes verändern.

Der Erfindung liegt die Aufgabe zu Grunde, bereits vor dem Ausstreuen zu ermitteln, ob der zum Ausstreuen vorgesehene granulierten Mineraldünger einer Mineraldüngersorte und/oder auszustreuender Düngermischungen verschiedener Mineraldüngersorten und/oder aus mehreren Mineraldüngersorten zusammengestellten Düngervarianten zum Ausbringen mit einem Zentrifugaldüngerstreuer mit angetriebenen Verteilelementen mit einer ausreichenden Verteilungsqualität ausgebracht werden kann und möglichst entsprechende Einstellwerte für den Zentrifugaldüngerstreuer anzugeben.

Diese Aufgabe wird erfindungsgemäß durch die Merkmale der Ansprüche 1 und 24 gelöst.

Durch bereits vor dem Ausstreuen und Verteilen des Düngers durch das erfindungsgemäße Verfahren wird bereits vorab die Eignung des Düngers zum Ausstreuen durch einen Zentrifugalstreuer festgestellt und die hieraus resultierenden Ausbringbedingungen, wie Arbeitsbreite, voraussichtliche Verteilungsqualität und Einstelldaten für den Zentrifugalstreuer ermittelt. Hierdurch ist eine vorteilhafte Bewertung von Düngermischungen hinsichtlich der Querverteilung in Verbindung mit einer vorzugsweise als Smartphone-basierte ausgebildete kamerabasierte Bildauswertung geschaffen.

Hierbei liegt die folgende erfindungsgemäße Erkenntnis als Basis zu Grunde: Damit diese Probleme beherrschbar werden, müssen die zu mischenden Einzelkomponenten bestimmte Vorrausetzungen bzgl. der physikalischen Stoffeigenschaften erfüllen d.h.:
- es müssen Ähnlichkeiten bzgl. des Reib-Rollverhaltens und der aerodynamischen Eigenschaften bestehen
   oder
- die Unterschiede wirken so miteinander, dass sie sich teilweise aufheben.

Mit den gängigen Prüfständen (mobil oder stationär) ist es allerdings nicht möglich, diese Probleme zu lösen.

Hier setzt die erfindungsgemäße Erkenntnis, wie vor dargestellt, ein, dass eine vorzugsweise als Smartphone-basierte ausgebildete kamerabasierte Bildauswertung hilfreich ist und die Lösung der bekannten Probleme bildet. Vor dem Kauf der Düngermischung kann damit in einfacher und überraschender Weise bereits geprüft werden, ob sich die vorliegenden granulierten Dünger, insbesondere bei einer Düngermischung für die Ausbringung mit Zentrifugaldüngerstreuer eignen. Es lässt sich ermitteln, welche Einstellwerte zur Einstellung des Zentrifugaldüngerstreuers zur Erreichung ausreichender Verteilungsqualität der zu verteilenden Dünger bei vorgegebener Arbeitsbreite gewählt werden müssen und/oder welche Arbeitsbreiten überhaupt mit ausreichender Verteilungsqualität möglich sind.

Bei auszustreuenden granulierten Düngern, die als Mischdünger vorliegen oder die als Mischdünger ausgestreut werden sollen, wobei die verschiedenen Düngerkomponenten, die miteinander gemischt wurden oder gemischt werden sollen, werden bei einer Durchführung des Verfahrens die verschiedenen Düngerkomponenten einzeln fotografiert, um diese Daten dann für eine entsprechende Auswertung zu nutzen.

Hierbei lassen sich dann aus den einzelnen Fotos die Düngerkomponenten identifizieren. Auf dieser Basis erfolgt dann die entsprechende erfindungsgemäße Auswertung zur Ermittlung der gewünschten Daten und entsprechend hierauf basierte Aussagen und Empfehlungen.

Hierbei geschieht die Identifizierung auf der vorzugsweise als Smartphone ausgebildeten Kamera mit Hilfe einer internen und/oder externen Datenbank.

Auch kann die Identifizierung im Internet auf einem Server auf Basis der gemachten Bilder durchgeführt werden.

In einer weiteren Durchführung des Verfahrens kann die Identifizierung durch die Daten des aufgenommenen Fotos und/oder durch Eingabe des Düngernamens und/oder Herstellers geschehen.

Auch ist es möglich, dass die Identifizierung durch Auswahl des Düngernamens und/oder Herstellers aus Listen einer internen/externen Datenbank geschieht.

Zusätzlich kann vorgesehen sein, dass auf Basis der Identifizierung die verschiedenen Stoffdaten (Schüttdichte, aerodynamische Eigenschaften, Rollreibverhalten, Einstellempfehlungen für verschiedene Streuer) aus einer internen und/oder externen Datenbank bezogen werden.

Weiterhin kann vorgesehen sein, dass die Einzelkomponenten vom Landwirt und/oder Düngermischer zu einem Stofflabor eingeschickt werden und die Stoffeigenschaften (wie z.B. Schüttdichte, aerodynamische Eigenschaften, Rollreibverhalten, Einstellempfehlungen für verschiedene Streuer) anhand von Laboruntersuchungen durchgeführt werden. Hierbei kann auf Daten, die entsprechend den in der EP 0 567495 B2 oder DE 41 05 046 A1 beschriebenen Verfahren unterstützend zurückgegriffen werden.

Unterstützend und/oder ergänzend kann vorgesehen sein, dass die Daten aus dem Stofflabor beispielsweise entsprechend den vorgenannten EP 0 567495 B2 oder DE 41 05 046 A1 manuell und/oder durch automatische Identifizierung/und oder durch Email und/oder durch Auswahl aus eingeschickten Untersuchungen ausgewählt werden können.

Eine weitere Verbesserung des Verfahrens zur Ermittlung der zu ermittelnden Daten zur Überprüfung der Eignung und der Ermittlung der Einstelldaten kann dadurch vorgesehen sein, dass jeweils abgewogene Mengen der Düngerkomponenten fotografiert werden. Hierbei werden in einer möglichen Durchführung des Verfahrens im vorgesehenen Mengenverhältnis die Düngerkomponenten einzeln fotografiert.

Alternativ oder ergänzend kann dazu vorgesehen sein, dass die vorgesehene Düngermischung insgesamt fotografiert wird.

Um eventuell aussagekräftigere und wiederholbare Ergebnisse zu erzielen, kann vorgesehen sein, dass die zu fotografierende Düngerkomponenten auf einer Platte ausgebreitet werden, und dass vorzugsweise auf der Platte ein Normgitter ausgezeichnet ist und/oder auf der Platte Normabstände eingetragen sind.

Um die gewünschten erfindungsgemäßen Daten zu erhalten, kann vorgesehen sein, dass in der vorzugsweise als Smartphone ausgebildeten Kamera die Schüttdichten der Düngerkomponenten eingegeben werden und/oder über das Internet und/oder aus einer internen Datenbank bezogen werden und/oder in der vorzugsweise als Smartphone ausgebildeten Kamera das gewünschte Mischungsverhältnis eingegeben wird.

Zur Ermittlung der gewünschten erfindungsgemäßen Daten ist in einer Ausgestaltung vorgesehen, dass in der vorzugsweise als Smartphone ausgebildeten Kamera Software installiert ist, das die aerodynamischen Eigenschaften der einzelnen Düngerkomponenten bewertet. Dieses kann mittels einer Bildauswertung und/oder Tabellenauswertung erfolgen.

Zur Verbesserung der erfindungsgemäßen zu ermittelnden Daten kann vorgesehen sein, dass die aerodynamischen Eigenschaften auf Basis der Identifizierung der Dünger bestimmt werden und die Daten aus einer internen Datenbank und/oder einer externen Datenbank bezogen werden.

In manchen Fällen kann es vorteilhaft sein, um die erfindungsgemäßen Daten zu ermitteln, dass in dem der vorzugsweise als Smartphone ausgebildeten Kamera Software installiert ist, die das Reib - Rollverhalten auf der Wurfscheibe bewertet (Tabellenauswertung) auf Basis der Daten der Einzelkomponenten und dem Mischungsverhältnis der Komponenten.

Gleichzeitig kann zur Überprüfung der Eignung des Düngers unter Berücksichtigung der Ermittlung der einzuhaltenden Ausbringparameter vorgesehen sein, dass in der vorzugsweise als Smartphone ausgebildeten Kamera Smartphone eine Software installiert ist, die bewertet, ob die Düngermischung geeignet ist, mit Zentrifugalstreuern auszubringen ist, dass in dem Smartphone eine Software installiert ist, die im Falle der Eignung die optimalen Einstellwerte berechnet.

Um in einfacher Weise eine Aussage über die einzuhaltenden Ausbringparameter treffen zu können, ist vorgesehen, dass in der vorzugsweise als Smartphone ausgebildeten Kamera eine Software installiert ist, die berechnet für welche Arbeitsbreiten die Düngermischung geeignet ist.

In einer Weiterbildung des erfindungsgemäßen Verfahrens ist vorgesehen, dass im Falle einer nicht eindeutigen Identifizierung einzelner Komponenten Vorschläge für "ähnliche" Dünger gemacht werden.

Im Falle einer nicht eindeutigen Identifizierung des Düngers werden die Düngereigenschaften anhand von "Felduntersuchungen" und der Bildauswertung der Düngerfotos vorgenommen.

Die aerodynamischen Eigenschaften werden aus einer geometrischen Bildauswertung, wobei z.B. die Kornform, Oberflächenstruktur und/oder Korngröße bestimmt werden, sowie aus der Schüttdichte der Einzelkomponenten abgeleitet

Der Korndurchmesser kann auch durch ein Siebverfahren ("Schüttelbox") bestimmt werden.

Das Reib-Rollverhalten wird auf Basis von Felduntersuchungen z.B. durch eine Rutsche und/oder Scherversuches bestimmt.

Die Nutzbarkeit der Düngermischung kann auch anhand eines Streuversuches mit ausgelegten Matten und Identifizierung der Mengenverteilung der einzelnen Komponenten auf den Matten bestimmt werden. Hierbei wird anhand der Auswertung auf den Matten eine Einstellkorrektur empfohlen.

Weiterhin kann bei einer Verbesserung des erfindungsgemäßen Verfahrens vorgesehen sein, dass anhand der Auswertung die Streubarkeit der Düngermischung bewertet wird.

Das erfindungsgemäße Verfahren lässt sich mit einer Software, die auf der vorzugsweise als Smartphone ausgebildeten und/oder serverbasiert im Internet läuft und/oder die Anwendung eine Web-Applikation / Webseite ist, durchführen.

Zur Durchführung des Verfahrens zur Überprüfung der Eignung von auszustreuenden granulierten Mineraldünger einer Mineraldüngersorte und/oder auszustreuender Düngermischungen verschiedener Mineraldüngersorten und/oder aus mehreren Mineraldüngersorten zusammengestellten Düngervarianten zum Ausbringen mit einem Zentrifugaldüngerstreuer mit angetriebenen Verteilelementen wird sind grundsätzlich folgendermaßen vorgegangen:
Mit der als der vorzugsweise als Smartphone ausgebildeten Kamera werden von dem auszustreuenden granulierten Mineraldünger einer Mineraldüngersorte und/oder der auszustreuenden Düngermischung verschiedener Mineraldüngersorten und/oder den Düngerkomponenten der auszustreuenden Düngermischung verschiedener Mineraldüngersorten und/oder zumindest einer Probe der vorstehenden auszubringenden Mineraldüngersorten und/oder Düngervarianten zumindest ein Foto mittels einer Kameraeinrichtung erstellt und das zumindest eine Foto und/oder mehrerer Fotos der vorstehenden Mineraldüngersorten und/oder Düngervarianten über ein in einer elektronischen Einrichtung hinterlegtes Auswerteprogramm mit hinterlegten Basisdaten verglichen und hieraus die Eignung und/oder Nichteignung der vorstehenden fotografierten Mineraldüngersorten und/oder Düngervarianten ermittelt und mittels zumindest einer Ausgabevorrichtung das ermittelte Ergebnis ausgegeben wird, und dass bei Erstellung der Eignung zum Ausstreuen der vorstehenden fotografierten Mineraldüngersorten und/oder Düngervarianten mit einem Zentrifugaldüngerstreuer weiterhin Einstelldaten für zumindest eine Arbeitsbreiteneinstellung des Zentrifugaldüngerstreuers für die vorstehenden fotografierten Düngersorten und oder Düngervarianten mittels zumindest einer Ausgabeeinrichtung ausgegeben werden.

Hierbei gibt es verschieden Vorgehensweisen:
Bei auszustreuenden granulierten Düngern, die als Mischdünger vorliegen oder die als Mischdünger ausgestreut werden sollen, werden die verschiedenen Düngerkomponenten, die miteinander gemischt wurden oder gemischt werden sollen, einzeln fotografiert, um diese Daten dann für eine entsprechende Auswertung zu nutzen. Die hierbei erfassten Bilddaten werden in einem entsprechenden Speicher des Smartphones abgespeichert, und die später erläutert durch ein in dem Speicher des Smartphones oder in anderer geeigneter Weise hinterlegten Auswerteprogramm lässt entsprechend ausgewertet, um zu der Beurteilung über die Eignung des Düngers zum Ausstreuen und/oder den gewünschten Einstelldaten zukommen.

Durch die entsprechenden einzelnen Fotos lassen sich mit der entsprechenden Auswerte Software die Düngerkomponenten identifizieren. Auf dieser Basis erfolgt dann die entsprechende Auswertung zur Ermittlung der gewünschten Daten und entsprechend hierauf basierte Aussagen und Empfehlungen.

Die Identifizierung der Dünger mittels der im Smartphone in Verbindung stehenden internen und/oder externen Datenbank durchgeführt.

Hierbei kann die die Identifizierung im Internet auf einem Server auf Basis der gemachten Bilder durchgeführt werden.

Auch kann die Identifizierung durch die Daten des aufgenommenen Fotos und/oder durch Eingabe des Düngernamens und/oder Herstellers geschehen.

Auch ist es möglich, dass die Identifizierung durch Auswahl des Düngernamens und/oder Herstellers aus Listen einer internen/externen Datenbank geschieht.

Erforderlichenfalls kann auch darauf zurückgegriffen werden, dass auf Basis der Identifizierung die verschiedenen Stoffdaten (Schüttdichte, aerodynamische Eigenschaften, Rollreibverhalten, Einstellempfehlungen für verschiedene Streuer) aus einer internen und/oder externen Datenbank mit einbezogen werden.

Der Landwirt kann die Einstelldaten auch darüber erhalten, dass er oder der Düngermischer die Einzelkomponenten zu einem Stofflabor schickt und die Stoffeigenschaften (wie z.B. Schüttdichte, aerodynamische Eigenschaften, Rollreibverhalten, Einstellempfehlungen für verschiedene Streuer) anhand von Laboruntersuchungen durchgeführt werden.

In besonderen Situationen kann es zum Einlesen der Dünger über das Smartphone durch abfotografieren erforderlich sein, jeweils abgewogene Mengen der Düngerkomponenten fotografiert werden. Hierbei werden dann von einer Person im vorgesehenen Mengenverhältnis die Düngerkomponenten einzeln fotografiert, alternativ oder ergänzend kann zusätzlich die vorgesehene Düngermischung insgesamt fotografiert werden.

In einer besonderen Ausführungsform werden die zu fotografierenden Düngerkomponenten auf einer Platte ausgebreitet. In bevorzugter Weise weist die Platte ein aufgezeichnetes oder anders aufgebrachtes Normgitter auf. Auch können auf der Platte Normabstände eingetragen sein.

In das Smartphone werden bei einer Weiterbildung der Erfindung die Schüttdichten der Düngerkomponenten eingegeben und/oder über das Internet und/oder aus einer internen Datenbank bezogen und direkt in das Smartphone eingespeist. Auch das gewünschte Mischungsverhältnis ist in das Smartphone eingebbar.

## Patentansprüche

1. Verfahren zur Überprüfung der Eignung zum Ausbringen mit einem Zentrifugaldüngerstreuer mit angetriebenen Verteilelementen von auszustreuenden granulierten Mineraldünger einer Mineraldüngersorte und/oder auszustreuender Düngermischungen verschiedener Mineraldüngersorten und/oder aus mehreren Mineraldüngersorten zusammengestellten Düngervarianten vor dem Ausstreuen und Verteilen, **dadurch gekennzeichnet, dass** von dem auszustreuenden granulierten Mineraldünger einer Mineraldüngersorte und/oder der auszustreuenden Düngermischung verschiedener Mineraldüngersorten und/oder den Düngerkomponenten der auszustreuenden Düngermischung verschiedener Mineraldüngersorten und/oder zumindest einer Probe der vorstehenden auszubringenden Mineraldüngersorten und/oder Düngervarianten zumindest ein Foto oder mehrere Fotos mittels einer Kameraeinrichtung erstellt werden, und dass das zumindest eine Foto oder mehrere Fotos der vorstehenden Mineraldüngersorten und/oder Düngervarianten über ein in einer elektronischen Einrichtung hinterlegtes Auswerteprogramm mit hinterlegten Basisdaten verglichen werden und hieraus die Eignung und/oder Nichteignung der vorstehenden fotografierten Mineraldüngersorten und/oder Düngervarianten ermittelt wird, dass mittels zumindest einer Ausgabevorrichtung das ermittelte Ergebnis ausgegeben wird, und dass bei Feststellen der Eignung zum Ausstreuen der vorstehenden fotografierten Mineraldüngersorten und/oder Düngervarianten mit einem Zentrifugaldüngerstreuer weiterhin Einstelldaten für zumindest eine Arbeitsbreiteneinstellung des Zentrifugaldüngerstreuers für die vorstehenden fotografierten Düngersorten und oder Düngervarianten mittels zumindest einer Ausgabeeinrichtung ausgegeben werden.

2. Verfahren nach Anspruch 1, **dadurch gekennzeichnet, dass** die verschiedenen Düngerkomponenten, die gemischt werden sollen, einzeln fotografiert werden.

3. Verfahren nach dem Anspruch 2, **dadurch gekennzeichnet, dass** aus den einzelnen Fotos die Düngerkomponenten identifiziert werden.

4. Verfahren nach zumindest einem der vorstehenden Ansprüche, **dadurch gekennzeichnet, dass** die Identifizierung auf der vorzugsweise als Smartphone ausgebildeten Kamera mit Hilfe einer internen und/oder externen Datenbank geschieht.

5. Verfahren nach zumindest einem der vorstehenden Ansprüche, **dadurch gekennzeichnet, dass** die Identifizierung im Internet auf einem Server auf Basis der gemachten Bilder durchgeführt wird.

6. Verfahren nach zumindest einem der vorstehenden Ansprüche, **dadurch gekennzeichnet, dass** die Identifizierung durch die Daten des aufgenommenen Fotos und/oder durch Eingabe des Düngernamens und/oder Herstellers geschieht.

7. Verfahren nach zumindest einem der vorstehenden Ansprüche, **dadurch gekennzeichnet, dass** die Identifizierung durch Auswahl des Düngernamens und/oder Herstellers aus Listen einer internen/externen Datenbank geschieht.

8. Verfahren nach zumindest einem der vorstehenden Ansprüche, **dadurch gekennzeichnet, dass** auf Basis der Identifizierung die verschiedenen Stoffdaten (Schüttdichte, aerodynamische Eigenschaften, Roll reibverhalten, Einstellempfehlungen für verschiedene Streuer) aus einer internen und/oder externen Datenbank bezogen werden.

9. Verfahren nach zumindest einem der vorstehenden Ansprüche, **dadurch gekennzeichnet, dass** die Einzelkomponenten vom Landwirt und/oder Düngermischer zu einem Stofflabor eingeschickt werden und die Stoffeigenschaften (wie z.B. Schüttdichte, aerodynamische Eigenschaften, Roll reibverhalten, Einstellempfehlungen für verschiedene Streuer) anhand von Laboruntersuchungen durchgeführt werden.

10. Verfahren nach dem Anspruch 9, **dadurch gekennzeichnet, dass** die Daten aus dem Stofflabor manuell und/oder durch automatische Identifizierung/und oder durch Email und/oder durch Auswahl aus eingeschickten Untersuchungen ausgewählt werden können.

11. Verfahren nach zumindest einem der vorstehenden Ansprüche, **dadurch gekennzeichnet, dass** jeweils abgewogene Mengen der Düngerkomponenten fotografiert werden.

12. Verfahren nach zumindest einem der vorstehenden Ansprüche, **dadurch gekennzeichnet, dass** im vorgesehenen Mengenverhältnis die Düngerkomponenten einzeln fotografiert werden.

13. Verfahren nach zumindest einem der vorstehenden Ansprüche, **dadurch gekennzeichnet, dass** die vorgesehenen Düngermischung insgesamt fotografiert wird.

14. Verfahren nach zumindest einem der vorstehenden Ansprüche, **dadurch gekennzeichnet, dass** die zu fotografierende Düngerkomponenten auf einer Platte ausgebreitet werden, und dass vorzugsweise auf der Platte ein Normgitter ausgezeichnet ist und/oder auf der Platte Normabstände eingetragen sind.

15. Verfahren nach zumindest einem der vorstehenden Ansprüche, **dadurch gekennzeichnet, dass** in der vorzugsweise als Smartphone ausgebildeten Kamera die Schüttdichten der Düngerkomponenten eingegeben werden und/oder über das Internet und/oder aus einer internen Datenbank bezogen werden und/oder in der vorzugsweise als Smartphone ausgebildeten Kamera das gewünschte Mischungsverhältnis eingegeben wird.

16. Verfahren nach zumindest einem der vorstehenden Ansprüche, **dadurch gekennzeichnet, dass** in der vorzugsweise als Smartphone ausgebildeten Kamera Software installiert ist, das die aerodynamischen Eigenschaften der einzelnen Düngerkomponenten bewertet.

17. Verfahren nach zumindest einem der vorstehenden Ansprüche, **dadurch gekennzeichnet, dass** die aerodynamischen Eigenschaften auf Basis der Identifizierung der Dünger bestimmt werden und die Daten aus einer internen Datenbank und/oder einer externen Datenbank bezogen werden.

18. Verfahren nach zumindest einem der vorstehenden Ansprüche, **dadurch gekennzeichnet, dass** in dem der vorzugsweise als Smartphone ausgebildeten Kamera Software installiert ist, die das Reib - Rollverhalten auf der Wurfscheibe bewertet (Tabellenauswertung) auf Basis der Daten der Einzelkomponenten und dem Mischungsverhältnis der Komponenten.

19. Verfahren nach zumindest einem der vorstehenden Ansprüche, **dadurch gekennzeichnet, dass** in der vorzugsweise als Smartphone ausgebildeten Kamera Smartphone eine Software installiert ist, die bewertet, ob die Düngermischung geeignet ist, mit Zentrifugaldüngerstreuern auszubringen, und/oder
dass in dem Smartphone eine Software installiert ist, die im Falle der Eignung die optimalen Einstellwerte berechnet.

20. Verfahren nach zumindest einem der vorstehenden Ansprüche, **dadurch gekennzeichnet, dass** in der vorzugsweise als Smartphone ausgebildeten Kamera eine Software installiert ist, die berechnet für welche Arbeitsbreiten die Düngermischung geeignet ist.

21. Verfahren nach zumindest einem der vorstehenden Ansprüche, **dadurch gekennzeichnet, dass** im Falle einer nicht eindeutigen Identifizierung einzelner Komponenten Vorschläge für "ähnliche" Dünger gemacht werden.

22. Verfahren nach zumindest einem der vorstehenden Ansprüche, **dadurch gekennzeichnet,** das anhand der Auswertung die Streubarkeit der Düngermischung bewertet wird.

23. Verfahren nach zumindest einem der vorstehenden Ansprüche, **dadurch gekennzeichnet, dass** die Software auf der vorzugsweise als Smartphone ausgebildeten und/oder serverbasiert im Internet läuft und/oder die Anwendung eine Web-Applikation / Webseite ist.

24. Vorrichtung mit Mitteln, welche zur Durchführung des Verfahrens nach zumindest einem der Ansprüche 1 bis 23, konfiguriert sind.

## Claims

1. Method for checking the suitability, before spreading and distribution, of granulated mineral fertilizer of a mineral fertilizer type to be spread and/or fertilizer mixtures of various mineral fertilizer types to be spread and/or fertilizer variants composed of a plurality of mineral fertilizer types for discharging with a centrifugal fertilizer spreader with driven distribution elements, **characterized in that** at least one photograph or a plurality of photographs are produced, by means of a camera device, of the granulated mineral fertilizer of a mineral fertilizer type to be spread and/or of the fertilizer mixture of various mineral fertilizer types to be spread and/or the fertilizer components of the fertilizer mixture of various mineral fertilizer types to be spread and/or at least one sample of the above mineral fertilizer types and/or fertilizer variants to be discharged, and **in that** the at least one photograph or plurality of photographs of the above mineral fertilizer types and/or fertilizer variants are compared with stored basic data by means of an evaluation program which is stored in an electronic device, and the suitability and/or non-suitability of the above photographed mineral fertilizer types and/or fertilizer variants are/is determined therefrom, **in that** the determined result is output by means of at least one output device and **in that** when the suitability of the above photographed mineral fertilizer types and/or fertilizer variants for spreading with a centrifugal fertilizer spreader is established, setting data for at least one working width setting of the centrifugal fertilizer spreader is also output for the above photographed fertilizer types and/or fertilizer variants by means of at least one output device.

2. Method according to Claim 1, **characterized in that** the various fertilizer components which are to be mixed are photographed individually.

3. Method according to Claim 2, **characterized in that** the fertilizer components are identified from the individual photographs.

4. Method according to at least one of the preceding claims, **characterized in that** the identification is carried out on the camera, preferably embodied as a smartphone, using an internal and/or external database.

5. Method according to at least one of the preceding claims, **characterized in that** the identification is carried out on the Internet on a server on the basis of the images which are taken.

6. Method according to at least one of the preceding claims, **characterized in that** the identification is carried out by means of the data of the recorded photograph and/or by inputting the name of the fertilizer and/or manufacturer.

7. Method according to at least one of the preceding claims, **characterized in that** the identification is carried out by selecting the name of the fertilizer and/or manufacturer from lists of an internal/external database.

8. Method according to at least one of the preceding claims, **characterized in that** the various substance data items (bulk density, aerodynamic properties, rolling friction behaviour, setting recommendations for various spreaders) are obtained from an internal and/or external database on the basis of the identification.

9. Method according to at least one of the preceding claims, **characterized in that** the individual components are sent in by the farmer and/or fertilizer mixer to a material laboratory, and the material properties (such as e.g. bulk density, aerodynamic properties, rolling friction behaviour, setting recommendations for various spreaders) are made on the basis of laboratory tests.

10. Method according to Claim 9, **characterized in that** the data from the material laboratory can be selected manually and/or by automatic identification and/or by email and/or by selection from tests which are sent in.

11. Method according to at least one of the preceding claims, **characterized in that** in each case weighed quantities of the fertilizer components are photographed.

12. Method according to at least one of the preceding claims, **characterized in that** the fertilizer components are photographed individually in the proportions provided.

13. Method according to at least one of the preceding claims, **characterized in that** the fertilizer mixture provided is photographed in its entirety.

14. Method according to at least one of the preceding claims, **characterized in that** the fertilizer components to be photographed are spread on a plate, and **in that** a standard grid is preferably marked on the plate and/or standard distances are entered on the plate.

15. Method according to at least one of the preceding claims, **characterized in that** the bulk densities of the fertilizer components are input in the camera which is preferably embodied as a smartphone and/or are obtained via the Internet and/or from an internal database and/or the desired mixture ratio is input in the camera which is preferably embodied as a smartphone.

16. Method according to at least one of the preceding claims, **characterized in that** software which evaluates the aerodynamic properties of the individual fertilizer components is installed in the camera which is preferably embodied as a smartphone.

17. Method according to at least one of the preceding claims, **characterized in that** the aerodynamic properties are determined on the basis of the identification of the fertilizers, and the data are obtained from an internal database and/or an external database.

18. Method according to at least one of the preceding claims, **characterized in that** software which evaluates the friction rolling behaviour on the thrower disk (table evaluation) on the basis of the data of the individual components and the mixture ratio of the components is installed in the camera which is preferably embodied as a smartphone.

19. Method according to at least one of the preceding claims, **characterized in that** software which evaluates whether the fertilizer mixture is suitable for discharging with centrifugal fertilizer spreaders is installed in the camera smartphone which is preferably embodied as a smartphone, and/or
**in that** software which calculates the optimum setting values in the case of suitability is installed in the smartphone.

20. Method according to at least one of the preceding claims, **characterized in that** software which calculates which working widths the fertilizer mixture is suitable for is installed in the camera which is preferably embodied as a smartphone.

21. Method according to at least one of the preceding claims, **characterized in that** suggestions for "similar" fertilizers are made in the event of individual components not being identified unambiguously.

22. Method according to at least one of the preceding claims, **characterized in that** the controllability of the fertilizer mixture is evaluated on the basis of the assessment.

23. Method according to at least one of the preceding claims, **characterized in that** the software runs on the which is preferably embodied as a smartphone and/or on a server basis on the Internet and/or the application is a web application/web page.

24. Device having means which are configured to carry out the method according to at least one of Claims 1 to 23.

## Revendications

1. Procédé de contrôle, avant l'épandage et la distribution, de l'aptitude à l'épandage avec une épandeuse d'engrais centrifuge équipée d'éléments de distribution entraînés d'un engrais minéral en granulés d'un type d'engrais minéral à épandre et/ou de mélanges d'engrais de différents types d'engrais minéraux à épandre et/ou de variantes d'engrais composées de plusieurs types d'engrais **caractérisé en ce qu'**au moins une photo ou plusieurs photos de l'engrais minéral en granulés d'un type d'engrais minéral à épandre et/ou du mélange d'engrais de différents types d'engrais minéraux à épandre et/ou des composantes d'engrais du mélange d'engrais de différents types d'engrais minéraux à épandre et/ou d'au moins un échantillon des types d'engrais minéraux et/ou des variantes d'engrais actuellement à épandre sont produites au moyen d'un dispositif à caméra, et **en ce que** l'au moins une photo ou les plusieurs photos des types d'engrais minéraux et/ou des variantes d'engrais actuellement à épandre sont comparées avec des données de base stockées par le biais d'un programme d'interprétation stocké dans un dispositif électronique et l'aptitude et/ou l'inaptitude des types d'engrais minéraux et/ou des variantes d'engrais actuellement photographiés en sont déduites, **en ce que** le résultat est délivré au moyen d'au moins un arrangement de sortie et **en ce qu'**en cas de constatation de l'aptitude à l'épandage des types d'engrais minéraux et/ou des variantes d'engrais actuellement photographiés avec une épandeuse d'engrais centrifuge, des données de réglage supplémentaires pour au moins un réglage de largeur de travail de l'épandeuse d'engrais centrifuge pour les types d'engrais minéraux et/ou les variantes d'engrais actuellement photographiés sont délivrées au moyen d'au moins un dispositif de sortie.

2. Procédé selon la revendication 1, **caractérisé en ce que** les différentes composantes d'engrais qui doivent être mélangées sont photographiées individuellement.

3. Procédé selon la revendication 2, **caractérisé en ce que** les composantes d'engrais sont identifiées à partir des photos individuelles.

4. Procédé selon au moins l'une des revendications précédentes, **caractérisé en ce que** l'identification sur la caméra, de préférence réalisée sous la forme d'un Smartphone, s'effectue à l'aide d'une base de données interne et/ou externe.

5. Procédé selon au moins l'une des revendications précédentes, **caractérisé en ce que** l'identification est réalisée sur l'Internet sur la base des photos prises.

6. Procédé selon au moins l'une des revendications précédentes, **caractérisé en ce que** l'identification est effectuée par les données des photos capturées et/ou par saisie du nom de l'engrais et/ou du fabricant.

7. Procédé selon au moins l'une des revendications précédentes, **caractérisé en ce que** l'identification est effectuée par sélection du nom de l'engrais et/ou du fabricant sur des listes d'une base de données interne/externe.

8. Procédé selon au moins l'une des revendications précédentes, **caractérisé en ce que** les différentes données de substance (densité en vrac, propriétés aérodynamiques, comportement de roulement et de frottement, recommandations de réglage pour différents engrais) sont extraites d'une base de données interne et/ou externe sur la base de l'identification.

9. Procédé selon au moins l'une des revendications précédentes, **caractérisé en ce que** les composantes individuelles sont envoyées à un laboratoire d'analyse des matériaux par l'agriculteur et/ou le mélangeur d'engrais et les propriétés des substances (comme par exemple la densité en vrac, les propriétés aérodynamiques, le comportement de roulement et de frottement, les recommandations de réglage pour différents engrais) sont mises en oeuvre au moyen d'analyses en laboratoire.

10. Procédé selon la revendication 9, **caractérisé en ce que** les données issues du laboratoire d'analyse des matériaux peuvent être sélectionnées manuellement et/ou par identification automatique et/ou par courrier électronique et/ou par sélection à partir des analyses envoyées.

11. Procédé selon au moins l'une des revendications précédentes, **caractérisé en ce que** les quantités pesées des composantes d'engrais sont respectivement photographiées.

12. Procédé selon au moins l'une des revendications précédentes, **caractérisé en ce que** les composantes d'engrais sont photographiées individuellement dans le rapport de quantité prévu.

13. Procédé selon au moins l'une des revendications précédentes, **caractérisé en ce que** le mélange d'engrais prévu est photographié dans son ensemble.

14. Procédé selon au moins l'une des revendications précédentes, **caractérisé en ce que** les composantes d'engrais à photographier sont étalées sur une plaque, et **en ce que** de préférence une grille normalisée est dessinée sur la plaque et/un des écarts normalisés sont enregistrés sur la plaque.

15. Procédé selon au moins l'une des revendications précédentes, **caractérisé en ce que** les densités en vrac des composants d'engrais sont saisies dans la caméra de préférence réalisée sous la forme d'un Smartphone et/ou acquises par le biais de l'Internet et/ou depuis une base de données interne et/ou le rapport de mélange souhaité est saisi dans la caméra de préférence réalisée sous la forme d'un Smartphone.

16. Procédé selon au moins l'une des revendications précédentes, **caractérisé en ce qu'**un logiciel est installé dans la caméra de préférence réalisée sous la forme d'un Smartphone, lequel évalue les propriétés aérodynamiques des composantes d'engrais individuelles.

17. Procédé selon au moins l'une des revendications précédentes, **caractérisé en ce que** les propriétés aérodynamiques sont déterminées sur la base de l'identification de l'engrais et les données sont récupérées auprès d'une base de données interne et/ou d'une base de données externe.

18. Procédé selon au moins l'une des revendications précédentes, **caractérisé en ce qu'**un logiciel est installé dans la caméra de préférence réalisée sous la forme d'un Smartphone, lequel évalue le comportement de frottement et de roulement sur le plateau de projection (interprétation de tableaux) sur la base des données des composantes individuelles et du rapport de mélange des composantes.

19. Procédé selon au moins l'une des revendications précédentes, **caractérisé en ce qu'**un logiciel est installé dans la caméra Smartphone de préférence réalisée sous la forme d'un Smartphone, lequel évalue si le mélange d'engrais est apte à un épandage avec des épandeuses d'engrais centrifuges et/ou **en ce qu'**un logiciel est installé dans le Smartphone qui, en cas d'aptitude, calcule les valeurs de réglage optimales.

20. Procédé selon au moins l'une des revendications précédentes, **caractérisé en ce qu'**un logiciel est installé dans la caméra de préférence réalisée sous la forme d'un Smartphone, lequel calcule les largeurs de travail pour lesquelles le mélange d'engrais est adapté.

21. Procédé selon au moins l'une des revendications précédentes, **caractérisé en ce que** dans le cas d'une identification non univoque des composantes individuelles, des propositions pour des engrais « équivalents » sont effectuées.

22. Procédé selon au moins l'une des revendications précédentes, **caractérisé en ce que** la capacité à l'épandage du mélange d'engrais est évaluée à l'aide de l'interprétation.

23. Procédé selon au moins l'une des revendications précédentes, **caractérisé en ce que** le logiciel est exécuté sur la de préférence réalisée sous la forme d'un Smartphone et/ou sur la base d'un serveur sur l'Internet et/ou l'application est une application Web / un site Web.

24. Arrangement comprenant des moyens qui sont configurés pour mettre en oeuvre le procédé selon au moins l'une des revendications 1 à 23.
